Europäisches Patentamt

European Patent Office

Office européen des brevets

(11) Veröffentlichungsnummer: **0 199 938**
**A1**

(12) **EUROPÄISCHE PATENTANMELDUNG**

(21) Anmeldenummer: 86103194.6

(22) Anmeldetag: 10.03.86

(51) Int. Cl.⁴: **C08G 18/66** , C08G 18/50 ,
C08K 5/52 , C08J 9/00 ,
C08L 71/02

(30) Priorität: 20.03.85 DE 3509959

(43) Veröffentlichungstag der Anmeldung:
10.12.86 Patentblatt 86/45

(84) Benannte Vertragsstaaten:
AT BE CH DE LI NL

(71) Anmelder: BAYER AG
Konzernverwaltung RP Patentabteilung
D-5090 Leverkusen 1 Bayerwerk(DE)

(72) Erfinder: Adam, Norbert, Dr.
An der Ruthen 6
D-5000 Köln 80(DE)
Erfinder: Wiegand, Eckehard, Dr.
c/o Sumitomo Bayer Urethane Co. Ltd. 15
5-Chome
Kitahama Higashi-Ku Osaka(DE)
Erfinder: Wiedermann, Rolf, Dr.
Wiesenstrasse 18
D-5068 Odenthal(DE)

(54) Polyolkomposition und ihre Verwendung zur Herstellung von harten Polyurethan-Schaumstoffen.

(57) Eine Polyolkomposition, enthaltend

a) 10 -49 Gew.-% eines mindestens zwei Hydroxylgruppen aufweisenden Polyethers mit einer OH-Zahl 350 -520, der durch Addition von Alkylenoxiden an 2.4-und/oder 2.6-Toluylendiamin erhalten worden ist,

b) 20 -50 Gew.-% eines Phosphor und/oder Halogen enthaltenden Flammschutzmittels,

c) 5 -15 Gew.-% eines mindestens zwei aktive Wasserstoffatome aufweisenden Vernetzungsmittels vom Molekulargewicht 32 -399.

d) 0,1 -2,5 Gew.-% eines oberflächenaktiven Mittels.

e) 0 -2 Gew.-% Wasser und

f) 0 -30 Gew.-% von weiteren Hydroxylgruppen aufweisenden Verbindungen vom Molekulargewicht 400 bis 10.000. wird zur Herstellung von harten Polyurethan-Schaumstoffen mit einem Raumgewicht von 30 -40 kg/m³ verwendet.

EP 0 199 938 A1

## Polyolkomposition und ihre Verwendung zur Herstellung von harten Polyurethan-Schaumstoffen

Harte Polyurethanschaumstoffe werden bekanntlich oft als Dämmstoffe zur Isolierung gegen Wärme oder Kälte eingesetzt.

Große Dämmstoffdicken, wie sie zunehmend in den Bauordnungen vieler Länder verlangt werden, - schaffen viele neue technische Probleme im Hochbau.

Gefordert werden daher Isolationsmatialien, die

1. einen möglichst niedrigen Wert der Wärmeleitfähigkeit und

2. eine gute Flammwidrigkeit aufweisen.

Polyurethan-Schaumstoffe weisen bereits sehr niedrige Wärmeleitfähigkeitswerte auf, es ist aber bekannt, daß der Einsatz bestimmter Polyole oder Zusatzmittel besonders niedrige Werte ergeben.

So wird z.B. in EP-PS 0 091 828 der Einsatz von speziellen Polyethern auf Basis von Toluylendiamin vorgeschlagen. Leider genügt das Brandverhalten dieser Schaumstoffe nicht den Anforderungen den für den Hochbau geltenden Normen.

Schaumstoffe auf Basis von Polyethern, die durch Anlagerung von Alkylenoxiden an Toluylendiamin erhalten wurden und die eine gute Flammwidrigkeit aufweisen, sind in Journal of Cellular Plastics, März/April 1984, S. 138-143, beschrieben. Hierbei handelt es sich aber um Polyisocyanurat-Schaumstoffe, die bekanntlich schwieriger zu verarbeiten sind als Polyurethan-Schaumstoffe und z.B. nur an erwärmte Deckschichten angeschäumt werden können.

In der US-PS 3 823 176 werden Schaumstoffe aus Polyethern auf Basis von Toluylendiamin und mit hohen Flammschutzmittel-Konzentrationen beschrieben. Es wird behauptet, daß der Zusastz von nicht-einbaufähigen Flammschutzmitteln Schaumstoffe mit schlechten mechanischen Eigenschaften gäbe. Erfindungsgemäß ist aber gelungen, Polyurethan-Schaumstoffe mit guten mechanischen Eigenschaften unter Verwendung einer speziellen Polyol-Komposition, die vorzugsweise nicht-einbaufähige Flammschutzmittel enthält, zur Verfügung zu stellen. Dabei kann die Viskosität der Polyol-Komponente beliebig niedrig eingestellt werden.

Ein Vorurteil gegen den Einsatz von nicht-einbaufähigen Flammschutzmitteln wird auch in der US-PS 4 032 484 erhoben (vgl. Spalte 1, Zeile 40 ff). Das dort vorgeschlagene Tribromimidazol hat den Nachteil, daß es fest ist (Fp. 214°C) und daher schwierig in Polyol-Kompositionen einzubringen ist.

In der FR-PS 1 498 537 wird die Verwendung von Polyethern auf Basis von Toluylendiamin mit Trichlorpropylphosphat (TCPP) beschrieben. Das Vergleichsbeispiel C zeigt, daß diese Lehre nicht die gestellte Aufgabe löst. Mit einer Menge an TCPP, die bezüglich des Brandverhaltens noch nicht die B2-Klassifizierung nach DIN 4102 erbringt, werden technisch unbrauchbare Schaumstoffe erhalten, da die Schaumstoffe schrumpfen und zu weich sind.

In der DDR-PS 56 632 wird die Herstellung von Polyurethan-Schaumstoffen auf Polyurethan-Basis unter Mitverwendung von TCPP und eines Vernetzers, z.B. Triethanolamin, vorgeschlagen. Die Menge an TCPP wird auf 60 Teile/100 Teile Polyether begrenzt (Anspruch 5). Vergleichsbeispiel D zeigt, daß auch hiermit bezüglich des Brandverhaltens keine B2-Klassifizierung nach DIN 4102 erreicht wird.

In der US-PS 4 409 341 wird die Herstellung von PU-Schaumstoffen hoher Rohdichte aus Polyethern auf Basis von Toluylendiamin unter Mitverwendung von Flammschutzmitteln beschrieben. Die Übertragung dieser Lehre auf Schaumstoffe mit Rohdichten von 30 -40 kg/m³ führt allerdings zu unbrauchbaren Ergebnissen, da Schaumstoffe dieser Art schrumpfen.

Aufgabe der Erfindung war, flammwidrig eingestellte Schaumstoffe mit niedriger Wärmeleitzahl und einem Raumgewicht von 30 -40 kg/m³, die die oben genannten Nachteile nicht aufweisen. zur Verfügung zu stellen.

Überraschend wurde festgestellt, daß unter Verwendung der erfindungsgemäßen Polyol-Komposition Polyurethan-Schaumstoffe erhalten werden, die einerseits eine niedrige Wärmeleitfähigkeit und andererseits ein Brandverhalten aufweisen, wie es in den Baunormen gefordert wird, d.h. die die Klassifizierung von B2 nach DIN 4102 erreichen.

Gegenstand der Erfindung ist somit eine neue Polyol-Komposition, enthaltend

a) 10 -49 Gew.-%. bevorzugt 15 -40 Gew.-%. eines mindestens zwei Hydroxylgruppen aufweisenden Polyethers mit einer OH-Zahl 350 -520, der durch Addition von Alkylenoxiden an 2.4-und/oder 2.6-Toluylendiamin erhalten worden ist,

b) 20 -50 Gew.-%. bevorzugt 20 -45 Gew.-%. eines Phosphor und/oder Halogen enthaltenden Flammschutzmittels,

c) 5 -15 Gew.-% eines mindestens zwei aktive Wasserstoffatome aufweisenden Vernetzungsmittels vom Molekulargewicht 32 -399,

d) 0,1 -2,5 Gew.-% eines oberflächenaktiven Mittels.

e) 0 -2 Gew.-% Wasser und

f) 0 -30 Gew.-% von weiteren Hydroxylgruppen aufweisenden Verbindungen vom Molekulargewicht 400 -10.000.

Erfindungsgemäß bevorzugt ist eine Polyol-Komposition, in der der Hydroxylgruppen aufweisende Polyether durch Addition von Propylenoxid und Ethylenoxid an 2.4-und/oder 2.6-Toluylendiamin erhalten worden ist.

Bevorzugt ist ferner eine Polyol-Komposition, in der das oberflächenaktive Mittel siliconfrei ist.

Die Erfindung betrifft auch die Verwendung der Polyol-Kompositionen zur Herstellung von harten Polyurethan-Schaumstoffen mit einem Raumgewicht von 30 -40 kg/m³.

Der Polyether (Komponente a) der Polyol-Komposition) wird in an sich bekannter Weise durch Anlagerung von Alkylenoxiden an 2.4-und/oder 2.6-Toluylendiamin hergestellt. Er weist in der Regel ein Molekulargewicht von 400 -700 und eine OH-Zahl von 350 -520 auf.

Die Komponente b) der Polyol-Komposition stellt ein Phosphor-und/oder Halogen-haltiges Flammschutzmittel dar, das vorzugsweise nicht-einbaufähig ist. Es ist besonders bevorzugt in einer Menge von 20 -32 Gew.-% in der Polyol-Komposition enthalten.

Die Komponente c) der Polyol-Komposition besteht aus an sich bekannten Verbindungen mit mindestens zwei gegenüber Isocyanaten reaktionsfähigen Wasserstoffatomen und einem Molekulargewicht von 32 -399. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Vernetzungsmittel dienen. Diese Verbindungen weisen in der Regel 2 bis 8, vorzugsweise 2 bis 4, gegenüber Isocyanaten reaktionsfähige Wasserstoffatome auf.

Als Beispiele für derartige Verbindungen seien genannt:

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-PS 3 723 392), Glyzerin (besonders bevorzugt), Trimethylolpropan, Hexantriol-(1,2,6), Trimethylolethan, Pentaerythrit, Chinit, Mannit und Sorbit, Ricinusöl, Diethylenglykol, Triethylenglykol, Tetraethylenglykol, höhere Polyethylenglykole mit einem Molekulargewicht bis 399, Dipropylenglykol, höhere Polypropylenglykole mit einem Molekulargewicht bis 399, Dibutylenglykol, höhere Polybutylenglykole mit einem Molekulargewicht bis 399, 4,4'-Dihydroxy-diphenylpropan, Ethanolamin, Diethanolamin, N-Methyldiethanolamin, Triethanolamin und 3-Aminopropanol.

Geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4-und 2,6-Hexahydrotoluylendiamin sowie deren Gemische, Perhydro-2,4'-und 4,4'-diaminodiphenylmethan, p-Xylylendiamin, Bis-(3-aminopropyl)-methylamin, Diamino-perhydroanthrazene (DE-OS 2 638 731) und cycloaliphatische Triamine gemäß DE-OS 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht.

Als Beispiele für aromatische Diamine seien Bisanthranilsäureester gemäß den DE-OS 2 040 644 und 2 160 590, 3,5-und 2,4-Diaminobenzoesäureester gemäß DE-OS 2 025 900 sowie 3,3'-Dichlor-4,4'-diamino-diphenylmethan, 2,4-und/oder 2,6-Toluylendiamin und 4,4'-Diaminodiphenylmethan genannt.

Komponente d) der Polyol-Komposition besteht aus oberflächenaktiven Mitteln, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diethylamin oder stearinsaures Diethanolamin in Frage. Auch Alkali-oder Ammoniumsalze von Sulfonsäuren wie etwa von Dedecylbenzolsulfonsäure oder Dinaphthylmethandisulfonsäure oder von Fettsäuren wie Ricinolsäure oder von polymeren Fettsäuren können als oberflächenaktive Zusatzstoffe verwendet werden.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind erfindungsgemäß jedoch siliconfreie oberflächenaktive Mittel.

Die gegebenenfalls in der Polyol-Komposition enthaltenen weiteren Hydroxylgruppen aufweisenden Verbindungen vom Molekulargewicht 400 - 10.000 (Komponente f) sind unterschiedlich von der Komponente a). Es handelt sich hierbei z.B. um die an sich bekannten, mindestens zwei Hydroxylgruppen aufweisenden Polyether und Polyester.

Die Herstellung von Polyurethan-Schaumstoffen unter Verwendung der erfindungsgemäßen Polyol-Komposition erfolgt nach dem an sich bekannten Einstufenverfahren, dem Prepolymerverfahren oder dem Semiprepolymerverfahren, wobei man sich oft maschineller Einrichtungen bedient, z.B. solcher ,die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen. Carl-Hanser-Verlag. München 1966. z.B. auf den Seiten 121-205, beschrieben.

Dabei wird die Polyol-Komposition mit Polyisocyanaten und gegebenenfalls Zusatzmitteln in an sich bekannter Weise so umgesetzt, daß harte Polyurethan-Schaumstoffe mit einem Raumgewicht von 30 -40 kg/m³ erhalten werden.

Als Polyisocyanate kommen in Frage:

Aliphatische, cycloaliphatische, araliphatische, aromatische und heterocyclische Polyisocyanate, wie sie z.B. von W. Siefken in Justus Liebigs Annalen der Chemie, 562, Seiten 75-136, beschrieben werden, beispielsweise solche der Formel

$$Q (NCO)_n$$

in der

n = 2 -4, vorzugsweise 2, und

Q einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15. vorzugsweise 6-13 C-Atomen,

oder einen araliphatischen Kohlenwasserstoffrest mit 8-15, vorzugsweise 8-13 C-Atomen,

bedeuten, z.B. Ethylen-diisocyanat, 1,4-Tetramethylendiisocyanat, 1,6-Hexamethylndiisocyanat, 1,12-Dodecandiisocyanat, Cyclobutan-1,3-diisocyanat, Cyclohexan-1,3-und -1,4-diisocyanat sowie beliebige Gemische dieser Isomeren, 1-Isocyanat-3,3,5-trimethyl-5-isocyanatomethyl-cyclohexan (DE-AS 1 202 785, US-PS 3 401 190), 2,4-und 2,6-Hexahydrotoluylendiisocyanat sowie beliebige Gemische dieser Isomeren, Hexahydro-1,3-und/oder -1,4-phenylendiisocyanat, Perhydro-2,4'-und/oder -4,4'-diphenylmethan-diisocyanat, 1,3-und 1,4-Phenylendiisocyanat, 2,4-und 2,6-Toluylendiisocyanat sowie beliebige Gemische dieser Isomeren, Diphenylmethan-2,4'-und/oder -4,4'-diisocyanat, Naphthylen-1,5-diisocyanat.

Ferner kommen beispielsweise erfindungsgemäß in Frage:

Triphenylmethan-4,4',4"-triisocyanat, Polyphenylpolymethylenpolyisocyanate, wie sie durch Anilin-Formaldehyd-Kondensation und anschließende Phosgenierung erhalten und z.B. in den GB-PS 874 430 und 848 671 beschrieben werden, m-und p-Isocyanatophenylsulfonyl-isocyanate gemäß der US-PS 3 454 606, perchlorierte Arylpolyisocyanate, wie sie z.B. in der DE-AS 1 157 601 (US-PS 3 277 138) beschrieben werden, Carbodiimidgruppen aufweisende Polyisocyanate, wie sie in der DE-PS 1 092 007 (US-PS 3 152 162) sowie in den DE-OS 2 504 400, 2 537 685 und 2 552 250 beschrieben werden, NorbornanDiisocyanate gemäß US-PS 3 492 330, Allophanatgruppen aufweisende Polyisocyanate, wie sie z.B. in der GB-PS 994 890, der BE-PS 761 626 und der NL-PS 7 102 524 beschrieben werden, Isocyanuratgruppen aufweisende Polyisocyanate, wie sie z.B. in der US-PS 3 001 973, in den DE-PS 1 022 789, 1 222 067 und 1 027 394 sowie in den DE-OS 1 929 034 und 2 004 048 beschrieben werden, Urethangruppen aufweisende Polyisocyanate, wie sie z.B. in der BE-PS 752 261 oder in den US-PS 3 394 164 beschrieben werden.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2.4-und 2.6-Toluylendiisocyanat sowie beliebige Gemische dieser Isomeren ("TDI"), insbesondere auch Polyphenylpolymethylenpolyisocyanate, wie sie durch Anilin-Formaldehyd-Kondensation und anschließende Phosgenierung hergestellt werden - ("rohes MDI") sowie deren Gemische mit 2.4-und/oder 2,6-Toluylendiisocyanat, ferner Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate. die sich vom 2,4-und/oder 2,6-Toluylendiisocyanat bzw. vom 4.4'-und/oder 2,4'-Diphenylmethandiisocyanat ableiten.

Die Polyol-Komposition enthält Wasser, das als Treibmittel wirkt. Zusätzlich werden organische Treibmittel wie halogensubstituierte Alkane, z.B. Methylenchlorid, Chloroform, Ethylidenchlorid, Vinylidenchlorid, Monofluortrichlormethan, Chlordifluormethan, Dichlordifluormethan in der Regel in einer Menge von 10 -50 Gew.-%. bezogen auf das Polyolgemisch, mitverwendet. Weitere Beispiele für eventuell mitzuverwendende Treibmittel sowie Einzelheiten über die Verwendung von Treibmitteln sind im Kunststoff-Handbuch, Band VII. herausgegeben von Vieweg und Höchtlen, Carl-Hanser-Verlag, München 1966, z.B. auf den Seiten 108 und 109, 453-455 und 507-510 beschrieben.

Bei der Schaumstoff-Herstellung können auch die an sich bekannten Katalysatoren, ferner Stabilisatoren gegen Alterung und Witterung, Weichmacher und fungistatisch und bakteriostatisch wirkende Substanzen sowie Füllstoffe wie Bariumsulfat, Kieselgur, Ruß oder Schlämmkreide mitverwendet werden.

Vertreter von erfindungsgemäß in Frage kommenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96-102 beschrieben.

Die Katalysatoren werden in der Regel in einer Menge zwischen etwa 0,001 und 10 Gew.-%, bezogen auf die Polyol-Komposition, eingesetzt.

Bei der Schaumstoff-Herstellung gemäß Erfindung wird in der Regel bei Kennzahlen zwischen 90 und 140 gearbeitet.

Beispiele

In an sich bekannter Weise wurden auf einer handelsüblichen Doppeltransportband-Anlage - (DTB-Anlage) durch maschinelles Vermischen der Komponenten Polyurethan-Hartschaumplatten hergestellt und bezüglich ihres Brandverhaltens und ihrer Wärmeleitfähigkeit geprüft (vergl. Tabelle).

Tabelle

| | Vergl.-Beisp. | Beisp. 1 | Vergl.-Beisp.A | Vergl.-Beisp.B | Beisp. 2 | Beisp. 3 | Vergl.-Beisp.C | Vergl.-Beisp.D |
|---|---|---|---|---|---|---|---|---|
| in Gewichts-Teilen | | | | | | | | |
| Ethylendiamin-Propylenoxidpolyether mit OH-Zahl 630 | 15 | 15 | 15 | - | 20 | 15 | - | - |
| derselbe mit OH-Zahl 810 | - | - | - | 17,4 | - | - | - | - |
| Zucker-Propylenglykol-Propylenoxid Polyether, OH-Zahl 470, (mit ca.17 Gew.-% Propylenglykol-PO-Polyether) | 30 | - | - | - | - | - | - | - |
| TDA*-Propylenoxid-Ethylenoxid Polyether (54 % Propylen-, 46 % Ethylenoxid, OH-Zahl 470) | - | 30 | 55 | 30 | - | 35 | 70 | 51,5 |
| TDA*-Propylenoxid-Polyether, OH-Zahl 400 | - | - | - | - | 26 | - | - | - |
| Glycerin | 9 | 9 | 9 | - | 10 | 10 | - | - |
| Triethanolamin | - | - | - | - | - | - | - | 15,5 |
| Glycerin-Propylenoxid/Ethylenoxid-polyether mit OH-Zahl 50 | - | - | - | 11 | - | - | - | - |

-------------------------------------------------

* Toluylendiamin, Gemisch aus 80 Gew.-% des 2,4-und 20 Gew.-% des 2,6-Isomeren

T a b e l l e (Forts.)

| | Vergl.- Beisp. | Beisp. 1 | Vergl.- Beisp.A | Vergl.- Beisp.B | Beisp. 2 | Beisp. 3 | Vergl.- Beisp.C | Vergl.- Beisp.D |
|---|---|---|---|---|---|---|---|---|
| Dimethyl-N,N-bis-(hydroxypropyl)-aminomethylphosphonat | 9 | 9 | - | - | 10 | 10 | - | - |
| Dibrombutendiol-Epichlorhydrin-Polyether (OH-Zahl 330, 32 % Brom, 6,8 % Chlor) | 20 | 20 | 9 | - | 20 | 20 | - | - |
| Trichlorethylphosphat | 15 | 15 | 10 | 40 | 12 | - | - | - |
| Trichlorpropylphosphat | - | - | - | - | - | - | 42 | - |
| Dimethylmethanphosphonat | - | - | - | - | - | 8 | - | - |
| Siliconstabilisator (OS 710 der Bayer AG, Lev.) | 1,4 | 1,4 | 1,4 | 1,4 | 1,4 | - | 1,4 | 1,4 |
| Stabilisator LK 221 v. Fa. Air-Products | - | - | - | - | - | 1,4 | - | - |
| Wasser | 0,6 | 0,6 | 0,6 | 0,6 | 0,6 | 0,6 | 0,6 | 0,6 |
| Trichlorfluormethan | 32 | 32 | 35 | 24 | 33 | 32 | 27 | 28 |
| Dimethylcyclohexylamin | 2 | 1,4 | 1,2 | 1 | 1,6 | 1,3 | 2 | 0,7 |
| rohes MDI mit ca. 48 % 2,4'- und 4,4'-Diphenylmethandiisocyanat | 144 | 144 | 155 | 85 | 149 | 139 | 97 | 120 |
| Kennzahl | 110 | 110 | 110 | 108 | 110 | 98 | 110 | 110 |

0 199 938

0 199 938

<u>T a b e l l e</u> (Forts.)

| | Vergl.- Beisp. | Beisp. 1 | Vergl.- Beisp.A | Vergl.- Beisp.B | Beisp. 2 | Beisp. 3 | Vergl.- Beisp.C | Vergl.- Beisp.D |
|---|---|---|---|---|---|---|---|---|
| Abbindezeit an der DTB-Anlage (sec) | 35 | 35 | 36 | - | 34 | 29 | 45 | 44 |
| Brandverhalten DIN 4102 | B2 | B2 | B3 | - | B2 | B2 | B3 | B3 |
| $\lambda$-Wert, gemessen bei 10°C, W/°K.m | 0,0185 | 0,0156 | genügt nicht den Brand- anforde- rungen | Schaum- stoff schrumpft, daher nur Handver- schäumung | 0,0165 | 0,016 | - | - |
| Rohdichte der Prüfplatte (kg/m³) | 35 | 35 | 35 | - | 36 | 34 | Handver- schäu- mung, sehr weich, leich- ter Schrumpf | Handver- schäumung |

Vergleichsbeispiel A wurde in Anlehnung an EP-PS 0 091 828 durchgeführt. Mit der hiernach erforderlichen Menge an TDA-Polyether wird ein ungenügendes Brandverhalten erreicht.

Vergleichsbeispiel B wurde in Anlehnung an US-PS 4 409 341 durchgeführt. In dem hier beschriebenen Rohdichtebereich werden unbrauchbare Produkte erhalten.

**Ansprüche**

1. Polyolkomposition, enthaltend

a) 10 -49 Gew.-%. bevorzugt 15 -40 Gew.-%, eines mindestens zwei Hydroxylgruppen aufweisenden Polyethers mit einer OH-Zahl 350 bis 520, der durch Addition von Alkylenoxiden an 2.4-und/oder 2.6-Toluylendiamin erhalten worden ist.

b) 20 -50 Gew.-%. bevorzugt 20 -50 Gew.-%, eines Phosphor und/oder Halogen enthaltenden Flammschutzmittels.

c) 5 -15 Gew.-% eines mindestens zwei aktive Wasserstoffatome aufweisenden Vernetzungsmittels vom Molekulargewicht 32 bis 399.

d) 0,1 -2,5 Gew.-% eines oberflächenaktiven Mittels.

e) 0 -2 Gew.-% Wasser und

f) 0 -30 Gew.-% von weiteren Hydroxylgruppen aufweisenden Verbindungen vom Molekulargewicht 400 bis 10.000.

2. Polyol-Komposition nach Anspruch 1, dadurch gekennzeichnet, daß der Hydroxylgruppen aufweisende Polyether durch Addition von Propylenoxid und Ethylen oxid an 2.4-und/oder 2.6-Toluylendiamin erhalten worden ist.

3. Polyol-Komposition nach Anspruch 1 und 2, dadurch gekennzeichnet, daß das oberflächenaktive Mittel siliconfrei ist.

4. Verwendung der Polyol-Kompositionen nach Anspruch 1 bis 3 zur Herstellung von harten Polyurethan-Schaumstoffen mit einem Raumgewicht von 30 -40 kg/m³.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 101 748 (VEB SYTHESEWERK) <br> * Anspruch; Seite 7, Absätze 2,4,5; Seite 8, Absätze 2,3 * | 1,4 | C 08 G 18/66 <br> C 08 G 18/50 <br> C 08 K 5/52 <br> C 08 J 9/00 <br> C 08 L 71/02 |
| | --- | | |
| X | GB-A-1 001 946 (I.C.I.) <br> * Ansprüche 1,3,9,11; Seite 3, Zeilen 5-6,55-62; Seite 4, Zeilen 27-30; Seite 5, Zeilen 2-11; Beispiele 1,2 * | 1-4 | |
| | --- | | |
| X | GB-A-1 159 435 (I.C.I.) <br> * Ansprüche 1,2,5,11; Seite 1, Zeile 71 - Seite 2, Zeile 22; Seite 2, Zeilen 30-34; Seite 3, Zeilen 24-33,56-64 * & DD - A - 56 632 (Kat. D) | 1,2,4 | |
| | --- | | RECHERCHIERTE SACHGEBIETE (Int. Cl.4) |
| X | GB-A-1 226 757 (I.C.I.) <br> * Ansprüche 10,11; Seite 1, Zeilen 57-72; Seite 2, Zeilen 38-64,108-125; Seite 3, Zeilen 36-46 * | 1-4 | C 08 G <br> C 08 K <br> C 08 J <br> C 08 L |
| | --- | | |
| A | GB-A-2 115 827 (BASF WYANDOTTE) <br> * Ansprüche 1-5; Seite 1, Zeilen 24-38; Seite 2, Zeilen 10-25 * | 1,3,4 | |
| | ----- | | |

Der vorliegende Recherchenbericht wurde für alle Patentansprüche erstellt.

| Recherchenort <br> DEN HAAG | Abschlußdatum der Recherche <br> 28-07-1986 | Prüfer <br> VAN PUYMBROECK M.A. |
|---|---|---|